# EUROPÄISCHE PATENTSCHRIFT

(11) **EP 1 181 327 B1**
(45) Veröffentlichungstag und Bekanntmachung des Hinweises auf die Patenterteilung: **24.02.2010**
(21) Anmeldenummer: 00925253.7
(22) Anmeldetag: 02.05.2000
(51) Int. Cl.: C08J 5/22, B01D 69/12

(54) **PROTONENLEITENDE KERAMIK-POLYMER-KOMPOSITMEMBRAN FÜR DEN TEMPERATURBEREICH BIS 300 oC**
PROTON-CONDUCTING CERAMICS/POLYMER COMPOSITE MEMBRANE FOR THE TEMPERATURE RANGE UP TO 300 oC
MEMBRANE COMPOSITE CERAMIQUE-POLYMERE, A CONDUCTION PROTONIQUE, POUR DOMAINE DE TEMPERATURE JUSQU'A 300oC

(30) Priorität: 30.04.1999 DE 19919988
(43) Veröffentlichungstag der Anmeldung: 27.02.2002
(73) Patentinhaber: Häring, Thomas, 70619 Stuttgart (DE); Häring, Rima, 70619 Stuttgart (DE)
(72) Erfinder: KERRES, Jochen, D-73760 Ostfildern (DE); NICOLOSO, Norbert, D-35037 Marburg (DE); SCHÄFER, Günther, D-65593 Westhofen (DE)
(86) Internationale Anmeldenummer: PCT/EP2000/003911
(87) Internationale Veröffentlichungsnummer: WO 2000/077080

(56) Entgegenhaltungen:
- EP-A- 0 302 494
- DE-A- 3 927 787
- US-A- 4 652 356
- POLTARZEWSKI Z ET AL: "Novel proton conducting composite electrolytes for application in methanol fuel cells" SOLID STATE IONICS,NL,NORTH HOLLAND PUB. COMPANY. AMSTERDAM, Bd. 119, Nr. 1-4, 1. April 1999 (1999-04-01), Seiten 301-304, XP004164408 ISSN: 0167-2738

## Beschreibung

### Zusammenfassung

Die Erfindung betrifft eine Kompositmembran aus organischen Funktionspolymeren und keramischen Nanoteilchen (1 -100 nm), ausgenommen Schicht - und Gerüstsilicate, mit intercaliertem Wasser und/oder hoher Oberflächenkonzentration an aciden/basischen Gruppen (z.B. Hydroxyl) und Wasser. Die Verwendung derartiger Partikel ermöglicht neben einer ausreichend hohen mechanischen Stabilität des Kompositwerkstoffs eine Stabilisierung der für die Leitfähigkeit notwendigen Protonenkonzentration in der Membran bis zu Einsatztemperaturen von 300 °C. Wesentlich sind die sich in der mikroheterogenen Mischung ausbildenden Grenzflächen zwischen Polymer und Keramikpulver , die bei ausreichend hoher Anzahl (hoher Phasenanteil nanoskaliger Teilchen) Protonentransport bei geringen Druck und Temperaturen oberhalb 100 °C erlauben. Modifikation der Polymer/Keramikpartikel-Randschicht anhand unterschiedlich polarer Randgruppen , bevorzugt am Polymergerüst, beeinflusst die lokale Gleichgewichtseinstellung und damit Bindungsstärke der protonischen Ladungsträger. Damit ergibt sich z.B. bei Alkohol-Wassermischungen als Brennstoff die Möglichkeit, den MeOH -Durchtritt (Me=CH₃, C₂H₅, C₃H₇, .....) durch die Membran zu verringern, was insbesondere für die Entwicklung effizienterer Direktmethanol-Brennstoffzellen von Bedeutung ist. Als Einsatzgebiete eröffnen sich außer Brennstoffzellen auch die Bereiche in der Energie- und Prozeßtechnik, bei denen neben elektrischem Strom Wasserdampf erzeugt oder benötigt wird oder (elektro -)chemisch katalysierte Reaktionen bei erhöhten Temperaturen von atmosphärischem Normaldruck bis erhöhten Arbeitsdrücken und oder unter Wasserdampf-Atmosphäre duchgeführt werden.

Die Erfindung betrifft weiterhin Verfahren zur Herstellung und Verarbeitung einer solchen Kompositmembran.

### Stand der Technik

Bei bekannten protonenleitenden Membranen (z.B. Nafion), die gezielt für Brennstoffzellenanwendungen entwickelt wurd en, handelt es sich i.d.R. um fiuorkohlenwasserstoff-basierende Membranen, die einen sehr hohen Gehalt bis zu 20% an Wasser in ihrem Membrangerüst besitzen. Die Leitung der Protonen basiert auf dem Grotthus-Mechanismus, nach dem in sauren Medien Protonen, in alkalischen Lösungen Hydroxylionen, als Ladungsträger auftreten. Es besteht eine über Wasserstoffbrückenbindungen vernetzte langreichweite Struktur, die den eigentlichen Ladungstransport ermöglicht. Das bedeutet, daß das in der Membran vorhandene Wasser eine tragende Rolle beim Ladungstransport spielt: Ohne dieses zusätzliche Wasser findet in diesen kommerziell erhältlichen Membranen kein nennenswerter Ladungstransport durch die Membran mehr statt, sie verliert ihre Funktion. Andere, neuere Entwicklungen, die anstelle des Fluorkohlen - wasserstoffgerüsts mit Phosphatgerüsten arbeiten, benötigen ebenfalls Wasser als zusätzlichen Netzwerkbildner (Alberti et. al., SSPC9, Bled, Slowenien, 17.-21.8.1998, Extended Abstracts, S. 235) . Die Zugabe kleinster SiO₂-Partiket zu o.g. Membranen (Antonucci et. al., SSPC9, Bled, Slowenien, 17. -21.8.1998, Extended Abstracts, S. 187) führt zwar zu einer Stabilisierung der Protonenleitung bis 140 °C, allerdings nur unter 4,5 bar Druck Betriebsbedingungen. Ohne erhöhten Arbeitsdruck verlieren auch diese (und ähnliche) Kompositmembranen oberhalb 100 °C ihr Wassernetzwerk und trocknen aus.

Ein wesentlicher Nachteil aller o. g. Membrantypen ist daher, daß sie selbst unter optimalen Betriebsbedingungen nur für Anwendungs temperaturen bis max. 100 °C geeignet sind. Poltarzewski et al (Solid State Ionics, 119, 1999, 301-304) beschreibt Mischungen von Zeolithen mit Polytetrafluoroethylen CPTFE).

### Erfindungsbeschreibung

Die Erfindung ist definiert durch Anspruch 1.

Durch die Erfindung werden Komposit-Matenalien bereitgestellt, die für Anwendungen in der Technik, speziell der Energietechnik und hier insbesondere für Brennstoffzellen im Mittel- und Hoch temperaturbetrieb (Temperatur oberhalb 100 °C), geeignet sind und bis zu Temperaturen von 300°C eine ausreichende Protonenleitfähigkeit besitzen.

Diese Aufgabe wird erfindungsgemäß durch ein Material gelöst, das aus einer Polymerkomponente und einer temperatur- und korrosionsstabilen, wasserhaltigen und nanoskaligen anorganischen (oxidischen) Komponente besteht, ausgeschlossen Gerüst- und Schichtsilicate. Im Vergleich zu konventionellen polymerelektrolytbasierten Materialien ist die Funktionsfähigkeit des Materials (Protonentransport) eng mit der keramischen Komponente verknüpft, was im Sinne eines einfachen Perkolationsansatzes einen Volumenanteil > Perkolationsgrenze (ca. 30 %) des Systems bzw. der Keramikkomponente erfordert (bei nichtidealen Teilchen, z.B. Nichtkugelförmigen, elongierten Teilchen wird diese Grenze i.a. zu weit niedrigeren Werten verschoben).

Als Polymerkomponente können alle Polymere eingesetzt werden, die eine gute Temperaturbeständigkeit aufweisen. Temperaturbeständige schwach ionen- oder protonenleitende Polymere wie z.B. Polybenzimidazol (PBI) sind vorteilhaft, jedoch nicht zwingend erforderlich. Gleiches gilt für schwach elektronisch leitende Polymere (Randbedingung:elektronische Leitfähigkeit mindestens 1-2 Größenordnungen geringer als Protonenleitfähigkeit). Alle letztgenannten Materialien sind Materialien mit einer weiten Bandlücke, typischerweise in der Größenordnung E_{g} > 2 eV.

Im folgenden sind die einsetzbaren Komponenten und damit auch deren möglichen Kombinationen näher beschrieben.

### Einsetzbare Polymere:

1 Alle temperaturbeständigen unfunktionalisierten Polymere, insbesondere:
   - Arylhauptkettenpolymere (z. B. Polyethersulfone, Polyetherketone, Polyphenylenoxide, Polyphenylensulfide)
   - Hetarylhauptkettenpolymere (z. B. Polybenzimidazole, Polyimidazole, Polypyrazole, Polyoxazole, ...)
2 lonomere mit S03H-, COOH,- PO3H2-Kationenaustauschergruppen und vorzugsweise einem Aryl- oder Hetaryl-Backbone
3 lonomere mit Anionenaustauschergruppierungen NR3+X - (R=H, Aryl, Alkyl, X= F, Cl, Br, I)
4 Vorstufe der lonomeren mit beispielsweise SO2Cl-, S02NR2, -CONR2-, etc. Gruppierungen oder NR2-Gruppierungen ((R=H, Aryl, Alkyl)
5 lonomerblends
6 Polymere mit sauren und anderen funktionellen Gruppen auf derselben Polymerhauptkette

Die Polymere und Polymerblends können dabei noch zusätzlich kovalent vemetztsein.

### Verwendungsfähige keramische Materialien

Die (anorganisch)-keramische Komponente des Komposites besteht zum wesentlichen Teil aus einem wasserhaltigen stoichiometrischen oder nichtstöchiometrischen Oxid MₓO_{y} ^{*} n H₂O (oder einer Mischung von Oxiden), wobei M die Elemente Al, Ce, Co, Cr, Mn, Nb, Ni Ta, La, V und W darstellt. Nicht Inhalt des Patents sind keramische Komponenten, die SiO₂ als überwiegenden Bestandteil enthalten. Alle keramischen Stoffe liegen in Form von nanokristallinen Pulvern (1 - 100 nm) vor, die Oberfläche von > 100 m ²/g aufweisen. Die bevorzugte Teilchengröße liegt bei 10 - 50 nm. Wesentlich für die hohe Protonenbeweglichkeit sind ihr hoher Wassergehalt (größer 10 bis 50 wt%) und die hinreichende Acidität oder Basizität der Oberflächen -Gruppen (-OH). Vorteilhaft ist die Ausbildung von wasserhaltigen Schichtstrukturen im Volumen einiger der o.a. Oxide, da dann auch im Volumen eine hohe Protonenbeweglichkeit und Protonenpufferkapazität vorliegt. Als prototypisches Material sei protonenausgetauschtes beta -Aluminiumoxid genannt (und Mischungen mit diesem Material). Neben den o. a. Materialien sind auch Carbonate und Hydroxycarbonate bzw. deren Mischung mit den Oxiden verwendungsfähig.Weiterhin einsetzbar sind die bei höheren Temperaturen (300 < T < 700 °C) protonenleitenden perowskitischen Oxide als Komponente für ein ternäres Komposit Oxid 1/Polymer/Oxid2, was eine Erhöhung der Einsatztemperatur ermöglicht. Letztere wird allein durch Zersetzungstemperatur der eingesetzten Polymerkomponente begrenzt , i.e im Falle von optimierten Thermoplasten T < 700° C. Für das Element Al als Hauptbestandteil der keramischen Komponente ergeben sich Aluminiumoxidverbindungen, die bis zu 35 wt% Wasser enthalten können (die Tabelle im Anhang listet typische Zusammensetzungen für die Aluminate, sowie ihre thermophysikalischen Eigenschaften auf). Für V und W ergeben sich analoge Oxidkomponenten bzw. Vorstufen aus Heteropolysäuren oder gelartigen Verbindungen und die die o.a. notwendigen strukturellen Eigenschaften besitzen. Besonders vorteilhafte Kompositeigenschaften ergeben sich, wenn vorzugsweise Keramikpulver aus Bayerit, Pseudoböhmit oder protonenausgetauschtem β-Aluminat sowie Mischoxide mit WOₓ (2<x<3,01), V₂O₅ oder MnO₂ mit bis zu 40 wt% Wasser als weiterer Komponente verwendet werden.

Bei Einsatz dieser letzgenannten Materialien steigt die Temperaturstabilität des Kompositwerkstoffs bis auf mindestens 300 °C bei einer relativen Feuchte von 60 - 70 % an. Erhöhung der Luftfeuchtigkeit und / oder Erhöhung des Arbeitsdrucks steigert die Anwendungstemperatur bis auf etwa 500 °C.

### Verfahrenstechnische- und Eigenschaftsvorteile gegenüber herkömmlichen Materialien

Vorteile der erfindungsgemäßen Komposite:
- H₂O-Speicherfähigkeit bis 250 -300°C bei Atmosphärendruck (unter erhöhtem Druck bis 500 °C)
- Protonen- bzw. OH⁻-loneneitung über wasser - und hydroxylhaltige Grenzflächenstruktur bis mindestens 250°C
- Gezielte Variation der lokalen Ladungsträger -Bindungsstärke durch unterschiedlich polare Gruppen am Polymergerüst bzw. an der Keramikpartikel-Oberfläche möglich (Verringerung des Methanoldurchtritts)
- Verbesserte mechanische Stabilität gegenüber keramischen und z .T. auch polymeren protonenleitenden Materialien
- Leichte Verformbarkeit, insbesondere zur Herstellung von Formkörpern, z. B. Rohre, Tiegel, Halbzeuge, wie sie in der SOFC, Batterien und/oder elektrokatalytischen (Membran-)reaktoren Verwendung finden
- verringertes wartungs- und regelintensives Wassermanagement im Anlagen - betrieb bei T > 100 °C.
   Aufgrund der hohen H ₂O-Pufferfähigkeit des Kompositwerkstoffs (thermodynamische Eigenschaft des Keramikpulvers) stellen sich die für den Einsatz notwendigen hohen Protonenkonzentration völlig selbstständig ein und kön - nen unter reduzierten Drücken einen stabilen Betrieb gewährleisten. Dies eröffnet neuartige Anwendungsfelder für den Einsatz einer solchen Kom - positmembran, etwa in wartungsarmen Gassensoren oder wartungsfrei arbeitenden Wasserstoffpumpen in der Anlagentechnik, speziell der Kerntechnik.
- Verwendung von nichtprotonenleitfähigen Polymeren möglich (Grenzfall ausschließlichen Protonentransports über Volumen/Grenzfläche der perkolierenden Oxidpartikel)
- mechanisches Eigenschaftsprofil einer Keramik wie thermomechanische Festigkeit, erhöhte Schlagzähigkeit und Härte, aber Fertigungsmethoden von Polymerwerkstoffen, extrudieren, foliengießen, tiefziehen, etc...
- niedriger Wasserpartialdruck bei Be triebstemperaturen über 120 °C, damit geringe Degradationstendenz
- Alle Komponenten der Komposite sind kommerziell verfügbar und preiswert.
- Die u.a. einfachen Herstellungsverfahren ermöglichen leichtes Up -Scaling für die Massenproduktion.

Zur Herstellung und zur Verarbeitung eines derartigen Kompositmaterials geeignete Verfahren sind:
- Foliengießen (Einmischen des Keramikpulvers in eine Polymerlösung, Homogenisieren, Foliengießen, Abdampfen des Lösungsmittels.
- Extrudieren der Polymer/Lösungsmittel/Keramik-Suspension
- Aufsprühen/Auftragen der Polymer/Lösungsmittel/Keramik-Suspension auf einen Support
- Spin-Coating

Die erfindungsgemäßen Polymer/Keramikpartikel-Komposite sind keine Polymerkeramiken im Sinne der Precursor-basierenden Pyrolysekeramiken, die zu SiC, SiCN, SiBCN, Si₃N₄ Misch-Keramiken für Hochtemperaturanwenungen oberhalb 1300 °C führen. Der Begriff "Polymerkeramik" wird für Strukturkeramiken (s. o.) verwendet, die durch Pyrolyse aus metallorganischen Verbindungen hergestellt werden. Stichwort: Polysilazane, Polysilane, Polycarbosilane, SiBCN - Keramik, etc.

## Patentansprüche

1. Protonen- oder Hydroxylionenleitfähiger Polymer-Keramikpartikel-Komposit oder Polymer-Keramikpartikel-Kompositmembrane, **dadurch gekennzeichnet, daß** das Polymer ein Aryl- oder Hetarylhauptkettenpolymer ist und das Keramikpartikel ein nanoskaliges Oxid, ausgenommen Schicht-und berüstsilikate, mit intercaliertem Wasser und gleichzeitig acidischen/basischen Oberflächen-OH ist.

2. Komposit nach Anspruch 1 **dadurch gekennzeichnet, daß** das Mischungsverhältniss von Polymer und Oxid von 99 zu 1 bis 70 zu 30 (in vol%) aufweist.

3. Komposit nach Anspruch 1, **dadurch gekennzeichnet, daß** er ein percolierendes Keramikpartikelnetzwerk aufweist, wobei das Mischungsverhältniss von Polymer und Oxid von > 30 vol% ist.

4. Komposit nach Anspruch 3, **dadurch gekennzeichnet, daß** er eine oder mehrere temperaturstabile, nichtprotonenleitfähige Polymerkomponenten enthält.

5. Komposit nach Ansprüchen 1 bis 4, **dadurch gekennzeichnet, daß** er eine Protonenleitfähigkeit > 10⁻⁵ S/cm bei T > 100 °C besitzen, wobei die elektronische Teilleitfähigkeit in der gleichen Größenordnung oder geringer ist.

6. Komposit nach Anspruch 1, **dadurch gekennzeichnet, daß** das Arylhauptkettenpolymer aus folgenden Bausteinen zusammengesetzt ist: 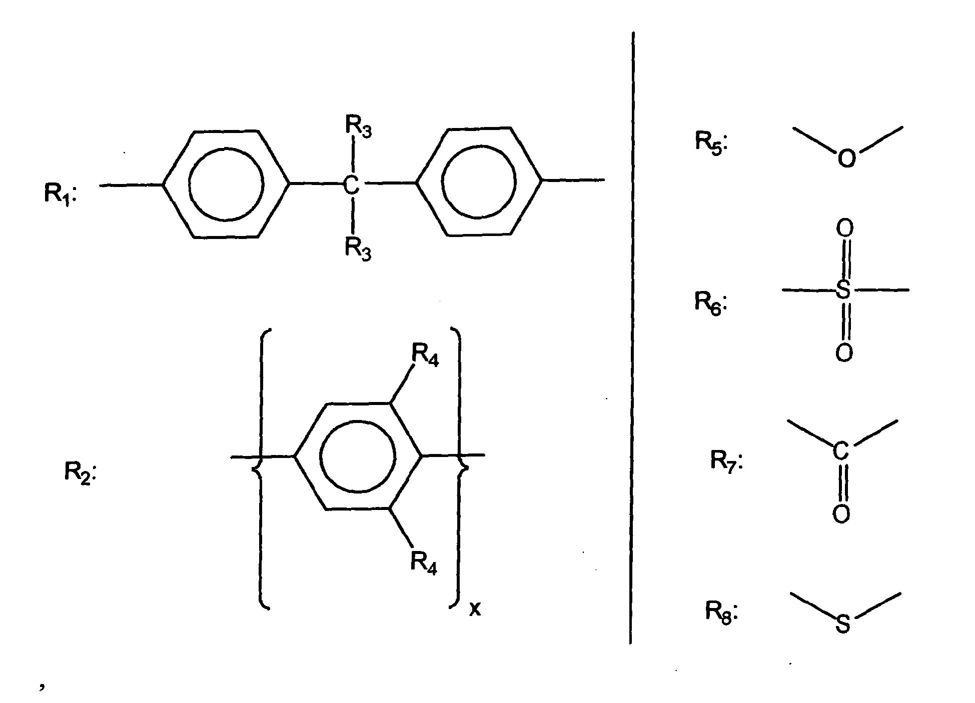 wobei erfindungsgemäße Aryl-Hauptkettenpolymere sind:
- Poly(etheretherketon) PEEK Victrex^{®} ([R₅-R₂-R₅-R₂-R₇]ₙ; x=1, R₄=H),
- Poly(ethersulfon) PSU Udel^{®} ([R₁-R₅-R₂-R₆-R₂-R₅]ₙ; R₂: x=1, R₄=H),
- Poly(ethersulfon) PES VICTREX^{®} ([R₂-R₆-R₂-R₅]ₙ; R₂: x=1, R₄=H),
- Poly(phenylsulfon) RADEL R^{®} ([(R₂)₂-R₅-R₂-R₆-R₂]ₙ; R₂: x=2, R₄=H),
- Polyetherethersulfon RADEL A^{®} ([R₅-R₂-R₅-R₂-R₆]ₙ-[R₅-R₂-R₆-R₂]ₘ; R₂: x=1, R₄=H, n/m =0,18) ,
- Poly(phenylensulfid) PPS ([R₂-R₈]ₙ; R₂: x=1, R₄=H)
- Poly(phenylenoxid) PPO ([R₂-R₅]ₙ; R₄=CH₃).

7. Komposit nach Anspruch 1, **dadurch gekennzeichnet, daß** das Hetarylhaüptkettenpolymer aus folgende Bausteinen zusammengesetzt ist: 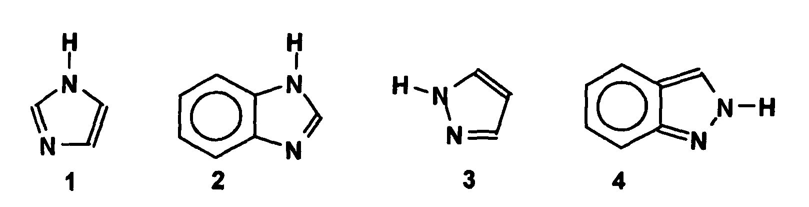 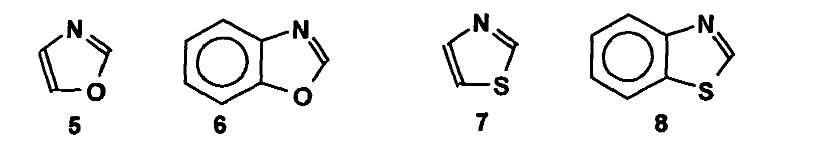 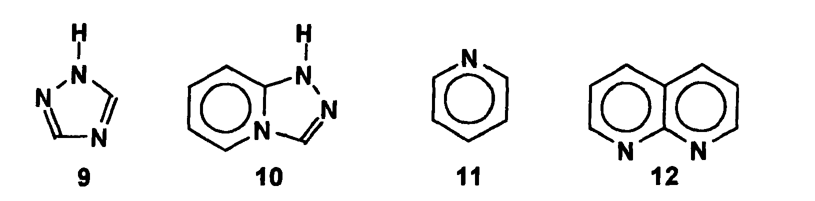 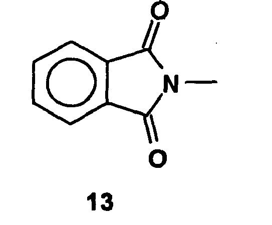 wobei 1 Imidazol, 2 Benzimidazol, 3 Pyrazol, 4 Benzpyrazol, 5 Oxazol, 6 Benzoxazol, 7 Thiazol, 8 Benzthiazol, 9 Triazol, 10 Benzotriazol, 11 Pyridin, 12 Dipyridin und 13 Phtalsäureimid ist.

8. Komposit nach den Ansprüchen 1 bis 7, **dadurch gekennzeichnet, daß** das Polymer die Kationenaustauschergruppen ausgewählt aus -SO₃M, -PO₃M₂, -COOM, und -B(OM)₂ , worin M bedeutet H, ein einwertiges Metallkation, Ammonium NR₄ mit R=H, Alkyl, Aryl enthält.

9. Hydroxylionenleitfähiger Polymer/Keramikpartikel-Komposit nach den Ansprüchen 1 bis 7, **dadurch gekennzeichnet, daß** das Polymer Anionenaustauschergruppen ausgewählt aus: NR₄ mit R=H, Alkyl, Aryl, Pyridinium, Imidazolium, Pyrazolium und Sulfonium enthält.

10. Hydroxylionenleitfähiger oder protonenleitfähiger Polymer/Keramikpartikel-Komposit nach den Ansprüchen 1 bis 9, **dadurch gekennzeichnet, daß** die keramische Komponente ausgewählt ist aus
- wassserhaltigen und nanogroßen Partikeln, die OH-Gruppen an ihrer Oberfläche ausbilden, und basierend sind auf
Al₂O₃ (Bayerit, Pseudoböhmit, Gibbsit = Hydrargillit, Diaspor, Böhmit), Vanadium- oder Wolfram-basierende Oxide (V₂O₅, VOₓ, WOₓ) oder Legierungen aus diesen Oxiden:
| | | |
|---|---|---|
| Al₂O_{3*}xH₂O | wobei x = 1-10 | |
| V₂O_{5 *}xH₂O | wobei x = 1-10 | |
| VO_{x*}yH₂O | wobei y = 1-10 | x = 1,5 - 3 |
| WO_{x*}yH₂O | wobei y = 1-10 | x = 2 -3 |
- protonierten, ionenausgetauschten Legierungen von Oxiden, die in ihrer ursprünglichen Ausgangszusammensetzung die β-Aluminat-Struktur formen, ausgewählt aus
| | | |
|---|---|---|
| zMe₂O-xMgO-yAl₂O₃, | _{z}Me₂O-xZnO-yAl₂O₃, | zMe₂O-xCoO-yAl₂O₃, |
| zMe₂O-xMnO-yAl₂O₃, | zMe₂O-xNiO-yAl₂O₃, | zMe₂O-xCrO-yAl₂O₃, |
| zMe₂O-xEuO-yAl₂O₃, | zMe₂O-xFeO-yAl₂O₃, | |
| zMe₂O-xSmO-yAl₂O₃ | | |
| mit Me= Na, K, wobei z = 0,7-1,2 | | |
(mit x = 0,1-10, y = 0,1 - 10).

11. Hydroxylionenleitfähiges oder protonenleitfähiges Polymer/Keramikpartikel-Komposit nach den Ansprüchen 1 bis 10, **dadurch gekennzeichnet, daß** die Oberflächen-OH-Gruppen durch Wechselwirkung mit weiteren organischen Verbindungen modifiziert sind.

12. Komposit nach Anspruch 8 **dadurch gekennzeichnet, dass** es neben sauren funkionellen Gruppen noch andere funktionelle Gruppen auf derselben Polymerhauptkette hat.

13. Komposit oder Kompositmembran nach den Ansprüchen 1-12 **dadurch gekennzeichnet, dass** das Polymer kovalent vernetzt ist.

14. Verfahren zur Herstellung der Komposite nach den Ansprüchen 1-13, **dadurch gekennzeichnet, daß** die Nanopartikel in die Lösung des Polymers eingemischt werden, danach homogenisiert werden, gefolgt von einem Foliengießen und dem Abdampfen des Lösungsmittels.

15. Verfahren zur Herstellung der Komposite nach den Ansprüchen 1-13, **dadurch gekennzeichnet, daß** das Polymer und die Nanopartikel in einem Lösungsmittel dispergiert werden und die Suspension extrudiert wird.

16. Verfahren zur Herstellung der Komposite nach den Ansprüchen 1-13, **dadurch gekennzeichnet, daß** das Polymer und die Nanopartikel in einem Lösungsmittel dispergiert werden und die Suspension auf einen Support aufgesprüht oder aufgetragen werden.

17. Verfahren nach den Ansprüchen 14 bis 16, **dadurch gekennzeichnet, daß** das verwendete Lösungsmittel ausgewählt ist aus N-Methylpyrrolidinon (NMP), N,N-Dimethylacetamid (DMAc), N,N-Dimethylformamid (DMF), Dimethylsulfoxid (DMSO), Sulfolan, Tetrahydrofuran (THF), Glyme, Diglyme, Triglyme, Tetraglyme, Dioxan, Toluol, Xylol, Petrolether oder aus beliebigen Mischungen dieser Lösungsmittel untereinander.

18. Verwendung der Komposite nach den Ansprüchen 1-13 in
- Brennstoffzellen (Direktmethanol- bzw Direktäthanol-, H2-, Kohlenwasserstoff-Brennstoffzellen)
- Batterien, insbesondere Sekundärbatterien
- Heißgas-Methanreforming zur Methanol- oder Ethanolsynthese,
- Wasserstoffherstellung aus Heißdampf
- elektrochemische Sensoren für H2, CHx, NOx, etc.
- in der Medizintechnik und
- der Elektrokatalyse

19. Verwendung der Protonenleiter nach den Ansprüchen 1 bis 13 zur Herstellung flächiger Gebilde, insbesondere Folien, Membranen, katalytischen oder elektrokatalytischen Elektroden.

20. Verwendung der Protonenleiter nach den Ansprüchen 1 bis 13 zur Herstellung von Rohren und Tiegeln über Extrusion und Preßverfahren.

## Claims

1. Proton or hydroxyl ion conducting polymer-ceramic-particle-composite or polymer-ceramic-particle-composite-membrane, **characterized in that** the polymer is a aryl- or het-aryl-main-chain-polymer and the ceramic particle is a nanosize oxide, excluding phyllosilicates or tectosilicates, containing intercalated water and at the same time acidic/basic surface OH.

2. Composite according claim 1 **characterized in that** it has a mixing ratio of polymer: oxide of from 99:1 to 70:30 (in % by volume).

3. Composite according claim 1 **characterized in that** it has a percolating ceramic particle network wherein the mixing ratio of polymer and oxide of > 30% by volume is.

4. Composite according claim 3 **characterized in that** it comprises one or more thermally stable polymer components which do not conduct protons.

5. Composite according claim 1 to 4 **characterized in that** it has a proton conductivity of >> 10⁻⁵ S/cm at T > 100°C, wherein the electronic component of conductivity is in the same magnitude or lower.

6. Composite according claim 1 **characterized in that** the aryl main chain polymer is composed of the following building blocks: 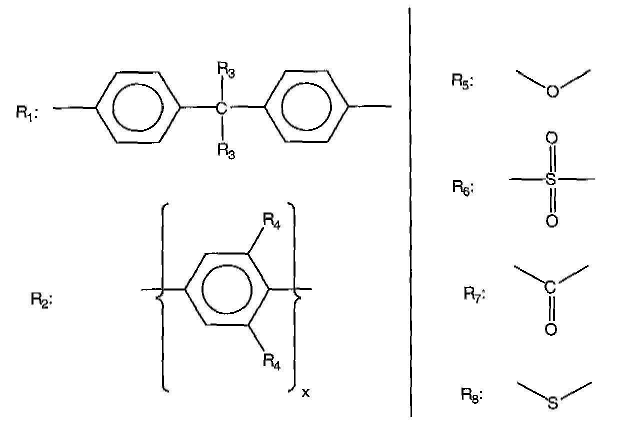 wherein according to the present invention aryl-main-chain-polymers are:
- poly(etheretherketone) PEEK Victrex^{®} ([R₅-R₂-R₅-R₂-R₇]ₙ: x=1, R₄=H),
- poly(ethersulfone) PSU Udel^{®} ([R₁-R₅-R₂-R₆-R₂-R₅]ₙ; R₂: x=1, R₄=H),
- poly(ethersulfone) PES VICTREX^{®} ([R₂-R₆-R₂-R₅]ₙ R₂: x=1, R₄=H),
- poly(phenylsulfone) RAVEL R^{®} ([(R₂)₂-R₅-R₂-R₆-R₂]ₙ; R₂: x=2, R₄=H),
- polyetherethexsulfone RADEL A^{®} ([R₅-R₂-R₅-R₂-R₆]ₙ-[R₅-R₂-R6-R₂]m; R₂: x=1, R₄=H, n/m =0,18),
- poly(phenylensulfide) PPS ([R₂-R₈]ₙ; R₂: x=1, R₄=H)
- poly(phenylenoxlde) PPO ([R₂-R₅]ₙ; R₄=CH₃).

7. Composite according claim 1 **characterized in that** the hetaryl main chain polymer consists of the following building blocks: 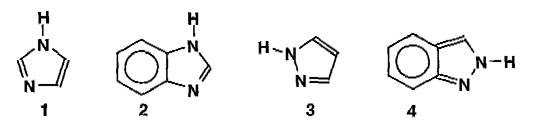 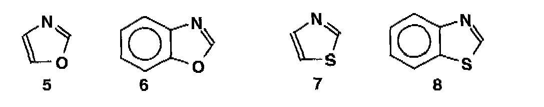 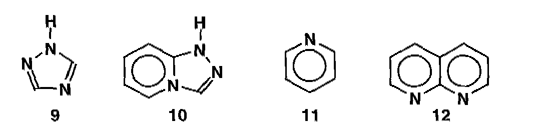 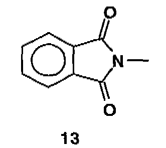 wherein 1 imidazole, 2 benzimidazole, 3 pyrazole, 4 benzpyrazole, 5 oxazole, 6 benzoxazole, 7 thiazole, 8 benzthiazole, 9 triazole, 10 benzotriazole, 11 pyridine, 12 dipyridine and 13 phtalimide is.

8. Composite according claim 1 to 7, **characterized in that** the polymer contains the cation-exchange groups selected from -S0₃M, -PO₃M₂, -COOM, -B(OM)₂ wherein M stands for H, monovalent metal cation, ammonium NR₄ where R=H, alkyl, aryl.

9. Hydroxyl ion conducting polymer/ceramic particle composite according to claim 1 to 7, **characterized in that** the polymer contain the following anion-exchange groups: NR₄ where R=H, alkyl, aryl, pyridinium, imidazolium, pyrazolium, sulfonium.

10. A polymer/ceramic particle composite capable of conducting hydroxyl ions as claimed in any of claims 1 to 7, **characterized in that** the ceramic component is selected from among:
- water-containing and nanosize particles which have OH groups on their surface, especially those based on Al₂O₃ (bayerite, pseudoboehmite, gibbsite = hydrargillite, diaspor, boehmite) and also vanadium- or tungsten-based oxides (V₂O₅, VOₓ, WOₓ)
or mixed forms of these oxides:
| | | | |
|---|---|---|---|
| Al₂O_{3*}H₂O | wherein | x = 1-10 | |
| V₂O_{5 *}xH₂O | wherein | x = 1-10 | |
| VO_{x*}yH₂O | wherein | y = 1-10 | x = 1,5 - 3 |
| WO_{x*}yH₂O | wherein | y = 1-10 | x = 2 -3 |
- protonated, ion-exchanged mixed oxides which in their original parent compositions form the ß-aluminate structure and are selected from the group mentioned below,
| | | |
|---|---|---|
| zMe₂O-xMgO-yAl₂O3, | _{z}Me₂O-xZnO-yAl₂O₃, | zMe_{z}O-xCoO-yAl₂O₃, |
| zMe₂O-xMnO-yAl₂O₃, | zMe₂O-xNiO-yAl₂O₃, | zMe₂O-xCrO-yAl₂O₃, |
| zMe₂O-xEuO-yAl₂O₃, | zMe₂O-xFeO-yAl₂O₃, | |
| zMe₂O-xSmO-yAl₂O₃ | | |
| with Me= Na, K, wherein z = 0,7 - 1,2 | | |
(with x = 0,1-10, y = 0,1 - 10).

11. A polymer/ceramic particle composite capable of conducting hydroxyl ions or protons as claimed in any of claims 1 to 10, **characterized in that** the surface OH groups are modified by interaction with further organic compounds.

12. Composite according to claim 8 **characterized in that** it contains beside the acid functional groups further functional groups on the same polymer backbone.

13. Composite or composite membrane according claim 1-12 **characterized in that** the polymer is covalently crosslinked.

14. Process for the producing of the composites according claim 1-13 **characterized in that** the nanoparticles are dispersed in the solution of the polymer, followed by homogenization, film casting and evaporating the solvent.

15. Process for the producing of the composites according claim 1-13 **characterized in that** the polymer and the nanoparticles are dispersed and the suspension is extruded.

16. Process for the producing of the composites according claim 1-13 **characterized in that** the polymer and the nanoparticles are dispersed in a solvent and the suspension is sprayed onto or applied to a support.

17. Process according to claims 14-16, **characterized in that** the solvent used is N-methylpyrrolidinone (NMP), N,N-dimethylacetamide (DMAc), N,N-dimethylformamide (DMF), dimethylsulfoxide (DMSO), sulfolane, tetrahydrofuran (THF), glyme, diglyme, triglyme, tetraglyme, dioxane, toluene, xylene, petroleum ether or any mixture of these solvents with one another.

18. The use of the composite as claimed in any of claims 1-13 in the following applications:
- fuel cells (direct methanol, direct ethanol, H₂ or hydrocarbon fuel cells)
- batteries, in particular secondary batteries
- hot gas methane reforming for the synthesis of methanol or ethanol
- production of hydrogen from hot steam
- electrochemical sensors for H₂, CHx, NOx, etc.
- applications in medical technology
- applications in electrocatalysis.

19. Use of the proton conductor according claim 1 to 13 for the production of flate shapes, particularly films, membranes, catalytic or electro catalytically electrodes.

20. Use of the proton conductor according claim 1 to 13 for the production of tubes and crucible by extrusion and press processes.

## Revendications

1. Composé à particules polymère-céramique ou membrane à particules polymère-céramique conducteur de protons ou de groupement hydroxyle **caractérisé par** un polymère avec des chaines principales en aryle ou hetaryle, la particule céramique est un oxyde nanométrique, à l'exception des silicates en couche ou en trame, avec de l'eau et des surfaces OH acide/basique intercalées.

2. Composé après la revendication 1 dans laquelle le rapport du mélangé de polymère et d'oxyde va de 99 à 1 jusqu'à 70 à 30 (% vol.).

3. Composé après la revendication 1, **caractérisé en ce qu'**il dispose d'un réseau de particules céramiques percolé dont le rapport du mélange du polymère et d'oxyde est supérieur à 30 % en volume.

4. Composé après la revendication 3, **caractérisé qu'**il est une ou plusieurs températures stable et qu'il contient des composants polymères non-conducteur protonique

5. Composé après la revendication 1 à 4, **caractérisé par** une conductivité protonique > 10⁻⁵ S/cm par des températures > 100°C, dans laquelle la conductivité électronique est plus ou moins dans le même ordre de grandeur.

6. Composé après la revendication 1, où la branche principale d'aryle est construite avec les éléments suivants: 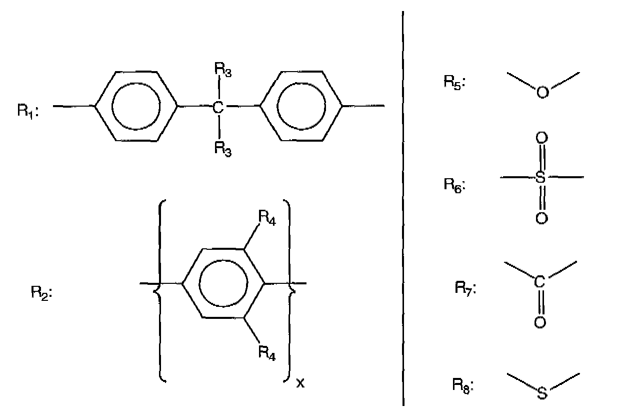 où sont les branches principales d'aryle expérimentales sont:
- poly(etheretherketone) PEEK Victrex^{®} ([R₅-R₂-R₅-R₂-R₇]ₙ; x=1., R₄=H).
- poly(ethersulfone) PSU Udel^{®} ([R₁-R₅-R₂-R₆-R₂-R₅]ₙ; R₂: x=1, R₄=H),
- poly(ethersulfone) PES VICTREX^{®} ([R₂-R₆-R₂-R₅]ₙ; R₂: x=1, R₄=H),
- poly(phenylsulfone) RADEL R^{®} ([(R₂)₂-R₅-R₂-R₆-R₂]ₙ; R₂: x=2, R₄=H),
- polyetherethersulfone RADEL A^{®} ([R₅-R₂-P-₅-R₂-R₆]ₙ-[R₅-R₂-R₆-R₂]ₘ; R₂: x=1, R₄=H, n/m =0,18) ,
- poly(phenylensulfide) PPS ([R₂-R₈]ₙ; R₂: x=1, R₄=H)
- poly(pheuylenoxide) PPO ([R₂-R₅]ₙ; R₄=CH₃).

7. Composé après la revendication 1, où la branche principale d'hetaryle est construite avec les éléments suivants: 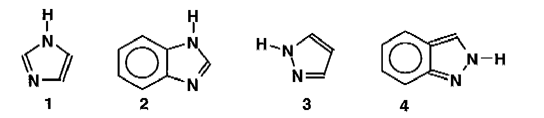 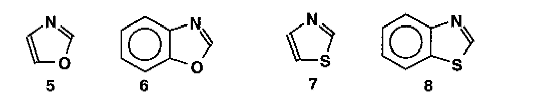 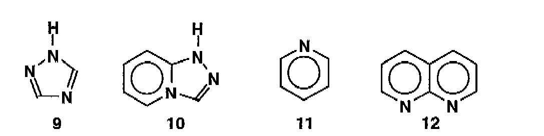 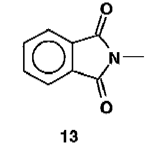 avec 1 Imidazole, 2 Benzimidazole, Pyrazole, 4 Benzpyrzole, Oxazole, 6 Benzoxazole, Thiazole, 8 Benzthiazole, 9 Triazole, 10 Benzotriazole, 11 Pyridine 12 Dipyridine et 13 Phtalimide

8. Composé après la revendication 1 à 7, **caractérisé par** le groupe échangeur de cations du polymère choisi à partir de -SO₃M, -P0₃M, -COOM, et -B(OM)₂ où M signifie H, d'un cation métallique monovalent, d'ammonium NR₄ avec R=H, d'alkyle, d'aryle.

9. Composé à particules polymère-céramique conducteur de groupement hydroxyle après la revendication 1 à 7, **caractérisé par** le groupe échangeur d'anions du polymère choisi à partir de: NR₄ avec R=H, d'alkyle, d'aryle, Pyridinium, Imidazolium, Pyrazolium et Sulfonium.

10. Composé à particules polymère-céramique conducteur de groupement hydroxyle ou conducteur de protons après la revendication 1 à 9, où les composants céramiques sont choisis à partir de particules hydratées et nanométriques, les groupes OH sont formés en leur surface et basés sur
Al₂O₅ (Bayerite, pseudoboehmite, gibbsite = hydrargillite, Diaspore, boehmite), oxyde à base de vanadium ou de wolfram (V₂O₅, VOₓ, WOₓ) ou d'alliages de ces oxydes:
| | | | |
|---|---|---|---|
| Al₂O_{3*}xH₂O | avec | x = 1-10 | |
| V₂O_{5 *}xH₂O | avec | x = 1-10 | |
| VO_{x*}yH₂O | avec | y = 1-10 | x = 1,5 - 3 |
| WO_{x*}yH₂O | avec | y = 1-10 | x = 2 -3 |
protonés, alliages d'oxydes avec échangement d'ions, qui ont leur composition formée de structures de bêta d'aluminate, choisi à partir de:
| | | |
|---|---|---|
| zMa₂O-xMgO-yAl₂O₃, | _{z}Me₂O-xZnO-yAl₂O₃, | zMe₂O-xCoO-yAl₂O₃, |
| zMe₂O-xMnO-yAl₂O, | zMe₂O-xNiO-yAl₂O₃, | zme₂O-xcro-yAl₂O₃, zMe₂O- |
| xEuO-yAl₂O₃, zMe₂O-xFeO-yAl₂O₃, | | |
| zMe₂O-xSmO-yAl₂O₃ | | |
| avec Me= Na, K, avec z = 0,7 - 1,2 | | |
(avec x = 0,1-10, y = 0,1 - 10).

11. Composé à particules polymère-céramique conducteur de groupement hydroxyle ou conducteur de protons après la revendication 1 à 10, où les groupes de surfaces OH sont modifiées par l'interaction avec d'autres composés organiques.

12. Composé après la revendication 8 **caractérisé par** qu'il ait en plus de groupes fonctionnels acides sur la chaîne principale du polymère d'autres groupes fonctionnels.

13. Composé ou membrane en composite après la revendication 1 à 12, où le polymère a des liaisons covalentes.

14. Méthode pour l'élaboration du composite après les revendications 1 à 13, où les nanoparticules sont mélangées dans la solution du polymère puis homogénéisées, puis coulage sur film et évaporation du solvant.

15. Méthode pour l'élaboration du composite après les revendications 1 à 13, où les nanoparticules et le polymère sont dispersés dans une solution et les suspensions sont extrudées.

16. Méthode pour l'élaboration du composite après les revendications 1 à 13, où les nanoparticules et le polymère sont dispersés dans une solution et les suspensions sont pulvérisées ou étalées sur un support.

17. Méthode après les revendications 14 à 16 où la solution chimique choisie est à partir de méthylpyrrolidone (NMP), dimthylacétamide (DMAc), dimethylformamide (DMF), dimethylsulfoxyde, sulfolane, tetrahydrofurane (THF), glyme, diglyme, tetraglyme, dioxane, toluol, xylol, éther de pétrole ou tout autre mélange des ces solvants.

18. Utilisation du composite après les revendications 1 à 13 avec piles à combustible batteries, en particulier batteries secondaires reformage de méthane chaud en méthanol ou éthanol de synthèse élaboration d'hydrogène à partir de vapeur chaude capteurs électrochimiques pour H₂, dans la technologie médicale et l'électrocatalyse

19. Utilisation du conducteur protonique après les revendications 1 à 13 pour l'élaboration de produits planaires en particulier films, membranes, électrodes catalytiques ou électrocatalytiques.

20. Utilisation du conducteur protonique après les revendications 1 à 13 pour l'élaboration de tubes et poêlons dans l'extrusion et dans la presse mécanique.
